# EUROPEAN PATENT APPLICATION

(11) **EP 4 238 792 A2**
(43) Date of publication of application: **06.09.2023**
(21) Application number: 23159492.0
(22) Date of filing: 01.03.2023
(51) Int. Cl.: B60H 1/00, B60H 1/32

(54) **MODULES FOR TRANSPORT REFRIGERATION SYSTEM**

(30) Priority: 01.03.2022 US 202263315308 P
(71) Applicant: Carrier Corporation, Palm Beach Gardens, FL 33418 (US)
(72) Inventor: OGGIANU, Stella Maris, Palm Beach Gardens, FL 33418 (US); MAKWINSKI, Mark, Palm Beach Gardens, FL 33418 (US); VAN HASSEL, Bart Antonie, Palm Beach Gardens, FL 33418 (US); PETERSON, Eric C., Palm Beach Gardens, FL 33418 (US); LINES, Michael, Palm Beach Gardens, FL 33418 (US)
(74) Representative: Dehns

(57) **Abstract**

A transport refrigeration system (20) comprising a plurality of component levels including a fuel source, a power source including a fuel cell operably coupled to the fuel source and configured to produce electrical power, and at least one load connected to and operable to receive electrical power from the power source, wherein the at least one load includes a refrigeration unit (30) having a refrigerant circuit through which a refrigerant is circulated and at least one of the plurality of component levels comprises a plurality of modules.

## Description

The present invention relates to a refrigeration system, and more particularly, to transport refrigeration systems powered by a fuel cell system.

Refrigerated trucks, trailers, and containers are commonly used to transport perishable cargo, such as, for example, produce, meat, poultry, fish, dairy products, cut flowers, pharmaceuticals and other fresh or frozen perishable products. Conventionally, transport refrigeration systems include a transport refrigeration unit having a refrigerant compressor, a condenser with one or more associated condenser fans, an expansion device, and an evaporator with one or more associated evaporator fans, which are connected via appropriate refrigerant lines in a closed loop refrigerant circuit. Air or an air/gas mixture is drawn from the interior volume of the cargo box by means of the evaporator fan(s) associated with the evaporator, passed through the airside of the evaporator in heat exchange relationship with refrigerant whereby the refrigerant absorbs heat from the air, thereby cooling the air. The cooled air is then supplied back to the cargo box.

The transport refrigeration unit typically uses power from sources like diesel engine. In newer systems, the power may be provided from a fuel cell located on board the transport refrigeration system. However, the fuel cell and its connection to the transport refrigeration unit may form a single point of failure that could be potentially catastrophic to operation of the transport refrigeration system.

According to a first aspect of the invention, there is provided a transport refrigeration system including a plurality of component levels including a fuel source, a power source including a fuel cell operably coupled to the fuel source and configured to produce electrical power, and at least one load connected to and operable to receive electrical power from the power source. The at least one load includes a refrigeration unit having a refrigerant circuit through which a refrigerant is circulated. At least one of the plurality of component levels comprises a plurality of modules.

Optionally, the at least one load further comprises a load separate from the refrigeration unit.

Optionally, the at least one load includes a plurality of load modules.

Optionally, the refrigeration unit is a single load module of the plurality of load modules.

Optionally, the refrigeration unit further comprises a plurality of electrical loads, each of the plurality of electrical loads being a distinct load module.

Optionally, the plurality of electrical loads of the refrigeration unit further comprises a compressor and at least one fan assembly, wherein a first load module includes the compressor and a second load module includes the at least one fan assembly.

Optionally, at least one load module of the plurality of load modules is associated with component separate from the refrigeration unit.

Optionally, the power source includes a plurality of power source modules. Each of the plurality of power source module is operably coupled to at least one of the plurality of load modules.

Optionally, each of the plurality of power source modules is operably coupled to at least one of the plurality of load modules.

Optionally, each of the plurality of power source modules is operably coupled to each of the plurality of load modules.

Optionally, the transport refrigeration system comprises a distribution device operably coupled to an outlet of each of the plurality of power source modules and an inlet of each of the plurality of load modules.

Optionally, the fuel source includes a plurality of fuel source modules, each of the plurality of fuel source modules being operably coupled to a respective power source module of the plurality of power source modules, and each of the plurality of power source modules being operably coupled to a respective load module of the plurality of load modules.

Optionally, the refrigeration unit is operably coupled to a container, the container having a plurality of distinct zones formed therein, each zone of the plurality of zones part of a corresponding load module of the plurality of load modules.

Optionally, the fuel source includes a plurality of fuel source modules.

Optionally, at least one of the plurality of fuel source modules is located remotely from the refrigeration system.

Optionally, the power source includes a plurality of power source modules, each of the plurality of fuel source modules being operably coupled to at least one of the plurality of power source modules.

Optionally, each of the plurality of fuel source modules is operably coupled to each of the plurality of power source modules.

According to a second aspect of the invention, there is provided a method of operating a transport refrigeration system including generating, using a power source comprising a fuel cell, an electrical power and delivering the electrical power to a load via a delivery path, monitoring operation of one or more components of the refrigeration system, and adjusting the delivery path in response to said monitoring. Adjusting the delivery path comprises at least one of: (i) adjusting at least one power source module operable to generate the electrical power; and (ii) adjusting at least one fuel source module operable to supply fuel used to generate the electrical power.

Optionally, the monitoring operation of the one or more components further comprises sensing a failure or an imminent failure of the one or more components.

According to a third aspect of the invention, there is provided a continuously operable power system for a transport refrigeration system, the power system including a power source, a filling station, a plurality of fuel canisters, and a piping system connecting the plurality of fuel canisters to the filling station and to the power source The piping system includes at least one isolation valve operable to control a flow within the piping system. The at least one isolation valve is positionable such that a fuel canister of the plurality of fuel canisters is in fluid communication with the power source and is isolated from another fuel canister of the plurality of fuel canisters, the another fuel canister being in fluid communication with the filling station.

The system of the third aspect of the invention may comprise any of the features as described herein with reference to the first aspect of the invention. The transport refrigeration system of the first aspect of the invention may be suitable for use with the method of the second aspect of the invention. The method may comprise providing and/or using the system(s) of the first and/or third aspect of the invention.

The following descriptions should not be considered limiting in any way. With reference to the accompanying drawings, which are provided by way of example only, like elements are numbered alike:
FIG. 1 is a perspective view of a transport refrigeration system;
FIG. 2 is a schematic illustration of a transport refrigeration unit of a transport refrigeration system;
FIG. 3 is a schematic diagram of several component levels of a transport refrigeration system;
FIG. 4 is a schematic diagram of several component levels of a transport refrigeration system;
FIG. 5 is a perspective view of a piping system of the plurality of fuel modules;
FIG. 6 is a schematic diagram of several component levels of a transport refrigeration system;
FIG. 7 is a schematic diagram of several component levels of a transport refrigeration system;
FIG. 8 is a schematic diagram of several component levels of a transport refrigeration system;
FIG. 9 is a schematic diagram of several component levels of a transport refrigeration system;
FIG. 10 is a schematic diagram of several component levels of a transport refrigeration system; and
FIG. 11 is a schematic diagram of management system for managing operation of one or more modules of a transport refrigeration system.

A detailed description of one or more embodiments of the disclosed apparatus and method are presented herein by way of exemplification and not limitation with reference to the Figures.

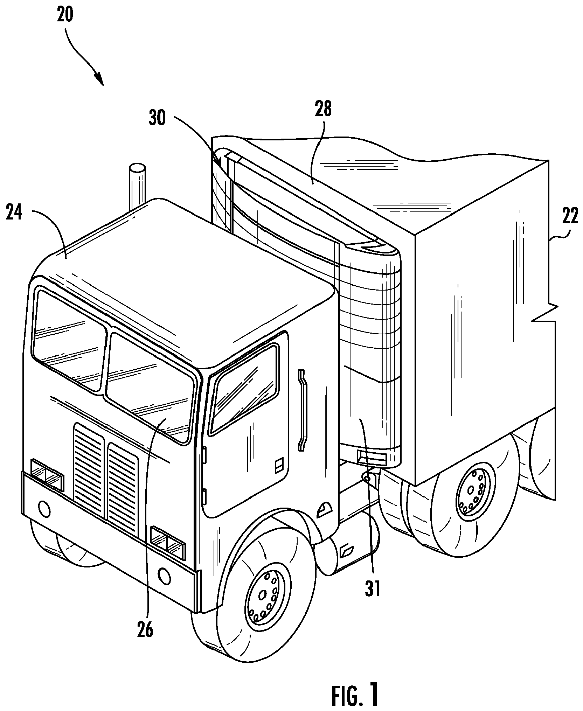

With reference now to FIG. 1, an exemplary transport refrigeration system 20 is illustrated. In the illustrated, non-limiting embodiment, the transport refrigeration system 20 is shown as a trailer system. As shown, the refrigerated container system 20 includes a cargo container or trailer 22 being towed or otherwise transported by a tractor 24 including an operator's compartment or cab 26 and also including an engine or other power source, such as a fuel cell for example, which acts as the drivetrain system of the transport refrigeration system 20. A refrigeration unit 30 is configured to maintain cargo located within the container 22 at a selected temperature by cooling the cargo space of the container 22. As shown, the refrigeration unit 30 is typically mounted at the front wall 28 of the container 22. Together, the refrigeration unit 30 and the cargo container 22 may form a transport refrigeration system 20. It should be appreciated by those of skill in the art that embodiments described herein may be applied to any transport refrigeration system such as, for example shipping containers that are shipped by rail, sea (via a watercraft), or any other suitable container, without use of a tractor 24.

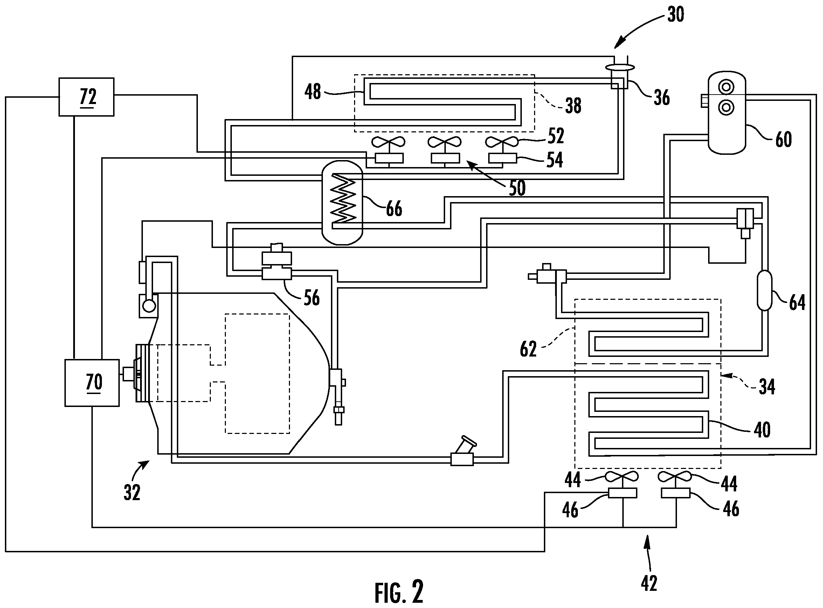

With reference now to FIG. 2, a schematic diagram of an exemplary refrigeration unit 30 is illustrated. The refrigeration unit 30 includes a compressor 32, a heat rejection heat exchanger or condenser 34, an expansion valve 36, and a heat absorption heat exchanger or evaporator 38 fluidly coupled to form a closed loop refrigeration circuit. During operation of the refrigeration unit 30, refrigerant R enters the compressor 32 and is compressed to a higher temperature and pressure. From the outlet of the compressor 32, the refrigerant gas is then provided to the condenser 34. In the illustrated, non-limiting embodiment, the condenser 34 is an air cooled condenser such that a flow of air across the condenser coils 40 cools the refrigerant gas R to its saturation temperature. By removing latent heat, the refrigerant gas within the condenser 34 condenses to a high pressure/high temperature liquid. The air flow across the condenser 34 may be energized by a condenser fan assembly 42 including one or more fans 44, such as two fans for example. As shown, each fan 44 may be driven by a separate fan motor 46.

In a refrigeration unit 30 having a basic vapor compression cycle, the flow output from the condenser 34 is provided directly to a thermostatic expansion valve 36 and evaporator 38. As the liquid refrigerant R passes through the orifice of the expansion valve 36, some of it vaporizes into a gas. Return air from the refrigerated space flows over the heat transfer surface of an evaporator 38. As refrigerant flows through tubes 48 in the evaporator 38, the remaining liquid refrigerant R absorbs heat from the return air, and in so doing, is vaporized. The air flow across the evaporator 38 may be energized by an evaporator fan assembly 50 including at least one fan 52 and a corresponding fan motor 54. From the evaporator 38, the vapor then flows through a suction modulation valve 56 back to an inlet of the compressor 32. In an embodiment, a thermostatic expansion valve bulb or sensor (not shown) is located at an evaporator outlet tube. The bulb is intended to control the thermostatic expansion valve 36, thereby controlling refrigerant superheating at the evaporator outlet tubing.

In the illustrated, non-limiting embodiment, the refrigeration unit 30 includes a plurality of components arranged between the condenser 34 and the expansion valve 36. As shown, a receiver 60 is arranged directly downstream from the outlet of the condenser 34. The receiver 60 is configured to provide storage for excess liquid refrigerant during low temperature operation. From the receiver 60, the liquid refrigerant R may pass through a subcooler heat exchanger 62. The subcooler 62 may be arranged in-line with and downstream from the condenser 34 such that the air flow from the at least one fan assembly 42 moves across the condenser 34 and the subcooler 62 in series. In an embodiment, at the outlet of the subcooler 62, the refrigerant R is provided to a filter dryer 64 that keeps the refrigerant cool and dry, and in some embodiments to a heat exchanger 66 that increases the refrigerant subcooling. In such embodiments, the refrigerant provided at the outlet of this heat exchanger 66 is delivered to the thermostatic expansion valve 36.

In an embodiment, the refrigeration unit 30 includes a power source 70 that is capable of powering all of the electric or electronic components of the refrigeration unit 30. For example, the compressor 32 may be a compressor assembly including an electric motor associated therewith and electricity from the power source 70 may be provided to the motor of the compressor. Alternatively, or in addition, the fan motors 46,54 associated with both the condenser 34 and the evaporator 38 fan assemblies 42, 50 are configured to receive power from the power source 70. The power source 70 may include at least one fuel cell, such as a single fuel cell, or alternatively a plurality of fuel cells, suitable to provide enough power for all of the dynamic components of the refrigeration unit 30. The fuel cell 70 may be a direct current (DC) power source; however, in an embodiment, the fuel cell is part of a system including power electronics that are able to convert the DC power to alternating current (AC) power as needed. The power source 70 may be located remotely from the remainder of the refrigeration unit 30, such as at a location underneath the trailer 22 for example, or alternatively, may be arranged within the housing 31 (FIG. 1) of the refrigeration unit 30.

A controller 72, such as a microprocessor, may be programmed to control power usage and the operation of various electrically powered components within the transport refrigeration system 20. For example, the controller 72 may be operable to regulate the power supplied to the condenser fan motors 46 and the evaporator fan motors 54. Programming such controllers is within the skill in the art.

In an embodiment, the power source 70 includes at least one hydrogen fuel cells, and in some embodiments, a plurality of hydrogen fuel cells. As is known in the art, a hydrogen fuel cell includes an anode configured to receive a fuel in the form of hydrogen and a cathode configured to receive an oxidant, such as oxygen or air. Within the fuel cell, the hydrogen reacts with the oxygen in a manner similar to a battery to produce electricity. Oxygen that is not consumed by the fuel cell is expelled therefrom as a cathode exhaust gas C saturated with water which is generated as a byproduct during operation of the fuel cell.

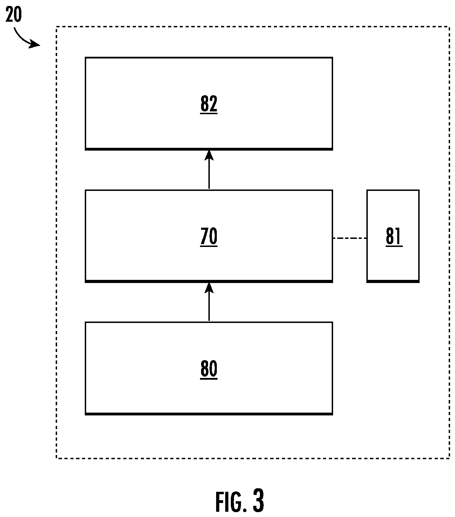

With reference now to FIGS. 3-7, various schematic diagrams of the transport refrigeration system 20 are illustrated. As shown, the transport refrigeration system 20 includes a plurality of component levels associated with operation of the transport refrigeration system 20. In the illustrated, non-limiting embodiment of FIG. 3, the component levels include a fuel source 80, a power source 70, and an electrical load 82. However, it should be understood that embodiments having additional components levels are also contemplated herein. The fuel source 80 is arranged in fluid communication with the power source 70. In embodiments where the power source 70 includes at least one fuel cell, the fuel source 80 may include a supply of hydrogen gas, and the power source 70 may include at least one hydrogen fuel cell. As shown, the at least one hydrogen fuel cell is operably coupled to the load, illustrated schematically at 82, such as the refrigeration unit 30 of the transport refrigeration system 20 for example. In an embodiment, a thermal management system 81, such as a coolant system for example, is operably coupled to the power source 70. The thermal management system 81 may be configured to remove heat generated by the power source 70 to facilitate enhanced operation of the power source 70.

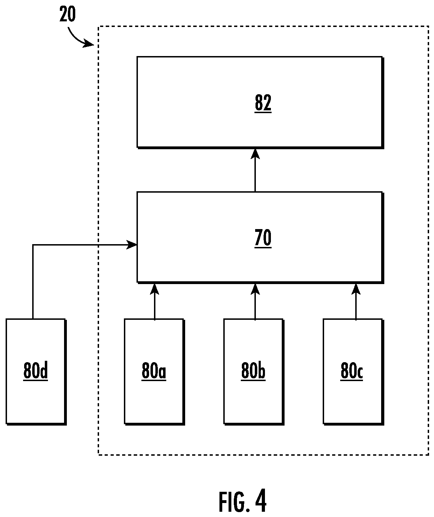

One or more of the component levels of the transport refrigeration system 20 may be formed via a plurality of modules to mitigate the risk of failure of the transport refrigeration system 20. In the non-limiting embodiment of FIG. 4, the fuel source 80 may be provided in the form of a plurality of modules. Although four fuel modules 80a-80d are illustrated in the FIG., embodiments having any number of fuel modules, such as two fuel modules, three fuel modules, or more than four fuel modules are within the scope of the disclosure. Each fuel source module 80a-80d may include one or more distinct canisters or containers of a fuel, such as hydrogen gas for example, and is operably coupled to a portion of the power source 70.

In an embodiment, one or more of the fuel modules 80a-80d are located remotely from and operably coupled to the transport refrigeration system 20. For example, in embodiments where the transport refrigeration system 20 is parked at a loading dock, a source of fuel forming a fuel module, illustrated at 80d, may be located at the loading dock. However, in an embodiment, one or more of the fuel modules, such as modules 80a-80c for example, are located on board the transport refrigeration system 20.

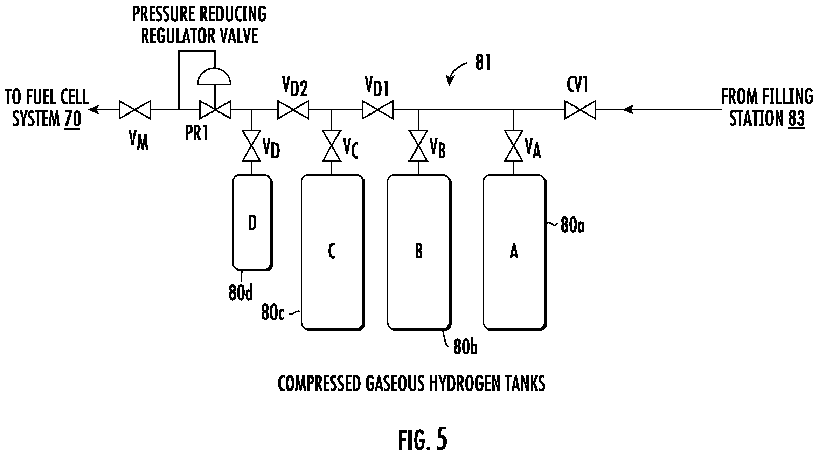

The plurality of fuel modules 80a-80d may be substantially identical, or in some embodiments may vary. As best shown in FIG. 5, in an embodiment, a volume of the canister or container of fuel associated with one of the fuel modules, such as 80d for example, is less than the volume of the canister of another fuel module, such as modules 80a-80c. The plurality of fuel modules 80a-80d may be connected to the power source 70 in series, or as shown in FIG. 5, in parallel. In the illustrated, non-limiting embodiment, a plurality of isolation valves V_{A}-V_{D} are disposed along a piping system 81 connecting each canister of the plurality of fuel modules 80a-80d, respectively, to the power source 70. The plurality of isolation valves may additionally include one or more intermediate isolation valves disposed between adjacent canisters. In the illustrated, non-limiting embodiment, the piping system 81 includes a first intermediate isolation valve V_{D1} positioned between the canisters of fuel modules 80b and 80c, and a second intermediate isolation valve V_{D2} disposed between the canisters of fuel modules 80c and 80d. Such intermediate isolation valves could be of the type of double block and bleed to achieve an even higher degree of isolation during the filling process.

By incorporating at least one intermediate isolation valve, a first portion of the fuel modules 80a-80d can be filled via a filling station 83 while a second portion of the fuel modules 80a-80d remains fluidly coupled to the power source 70 so that the power may continue to be generated for the one or more loads 82, such as the transport refrigeration unit 30. As a result, continuous operation of the power source 70 is achieved, thereby allowing the temperature within the container 22 to be maintained during a filling or refilling operation. For example, when intermediate isolation valve V_{D2} is closed and intermediate isolation valve V_{D1} is open, hydrogen from the canister of fuel module 80d may be delivered to the fuel cell system 70, and hydrogen from the filling station may be supplied to the canisters of fuel modules 80a-80c. In such embodiments, the canister of fuel module 80d may have a reduced sized selected to maintain operation of the transport refrigeration unit during a refilling operation. Alternatively, both intermediate isolation valves V_{D1} and V_{D2} may be closed such that the canisters of fuel modules 80c and 80d remain operable to deliver hydrogen to the power source 70 while the canisters of fuel modules 80a and 80b are filled .

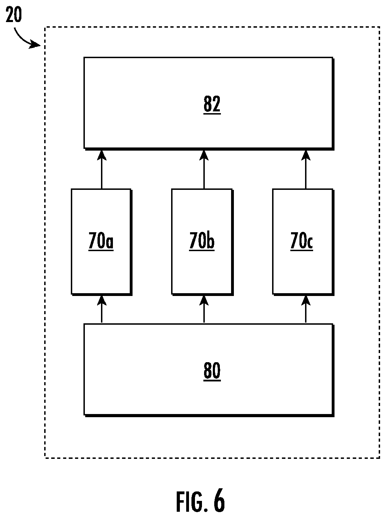

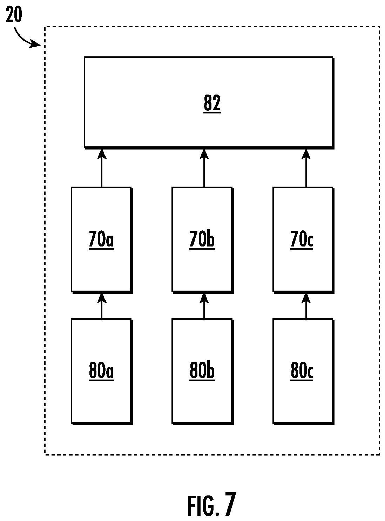

With reference now to FIGS. 6 and 7, alternatively, or in addition to the fuel modules 80a-80d, the power source 70 may include at least one power source module, such as a plurality of power source modules illustrated at 70a... 70n. Although three power source modules 70a-70c are illustrated, embodiments having two power source modules, or more than three power source modules are also contemplated herein. In an embodiment, each of the plurality of power source modules 70a-70c comprises one or more fuel cells, such as a fuel cell stack for example. In such embodiments, the total number of cells in the fuel cells of each module may be the same, or alternatively, may vary. In embodiments where the number and/or size of the cells in the fuel cells within each stack vary, such variation may be based on the one or more loads configured to receive the electricity of the respective power source module, as will be described in more detail below. Inclusion of modules 70a-70c with different numbers of cells within each fuel cell stack may enable operation of the power source 70 at a reduced power level. Accordingly, the one or more fuel cell used to provide power may vary based on the load required by the power source.

Each of the plurality of power source modules 70a-70c may be fluidly coupled to the same fuel source, as shown in the FIG. 6, such that each power source module 70a-70c receives fuel from a single fuel source. However, as shown in FIG. 7, embodiments where the transport refrigeration system 20 includes a plurality of fuel source modules 80a-80c as previously disclosed are also contemplated herein. In such embodiments, each fuel source 80a-80c module may be operably coupled to a respective power source module or group of power source modules 70a-70c.

In another embodiment, each fuel source module 80a-80c is fluidly connected to each of the plurality of power source modules 70a-70c. In such embodiments, one or more valves (not shown) disposed within the conduits that fluidly connect the fuel source modules 80a-80d to the power source modules 70a-70c may be operable, such as via the controller 72, to determine which power source module 70a-70c is configured to receive fuel from a respective fuel source module 80a-80d at any given time.

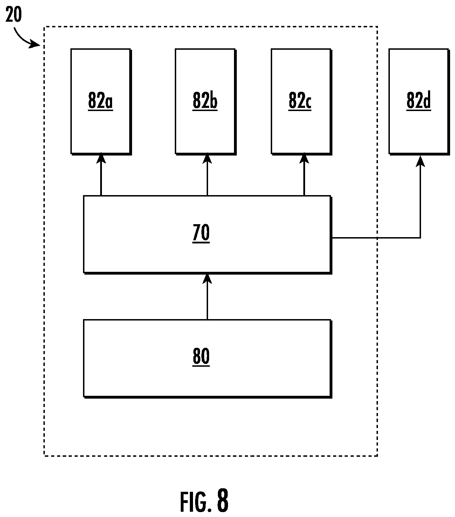

As previously described, the electrical power generated by the power source 70 is provided to at least one load 82, and in some embodiments, a plurality of electrical loads. With reference now to FIGS. 8-10, in an embodiment, the plurality of loads may be arranged or separated to form of a plurality of load modules. Although four load modules 82a-82d are illustrated in the FIGS., it should be understood that embodiments including two load modules, three load modules, or more than four load modules are also within the scope of the disclosure. The refrigeration unit 30, as a whole, may be considered a single load module. However, in other embodiments, each of the plurality of loads within the refrigeration unit 30, such as the motor of the compressor 32 or the motors 46, 54 operable to drive the condenser fans 44 and the evaporator fans 52 may be a separate and distinct load module. For example, the compressor or the electrical components thereof may be a first load module, and the at least one fan assembly may be a second load module. In an embodiment, the container 22 has a plurality of distinct zones formed therein, each zone having a different temperature setpoint. By including multiple zones, perishables having different temperature requirements, such as deep-frozen products and fresh fruits or flowers for example, can be carried at the same time. In an embodiment, each temperature zone within the container 22 is considered or associated with a different load module 82a-82d.

Further, the one or more load modules of the transport refrigeration system 20 may include a load module 82a-82d associated with a system separate from the refrigeration unit 30. Examples of a load of the transport refrigeration system 20 separate from the refrigeration unit 30 include, but are not limited to, a battery, a pump, a lift gate of the trailer 22, or another suitable load that uses electrical power. Alternatively, or in addition, the plurality of load modules 82a-82d may include a load that is separate from the transport refrigeration system 20, illustrated at 82d. For example, in embodiments where the transport refrigeration system 20 is parked, such as at a loading dock for example, a load module may be associated with a component or system at the loading dock.

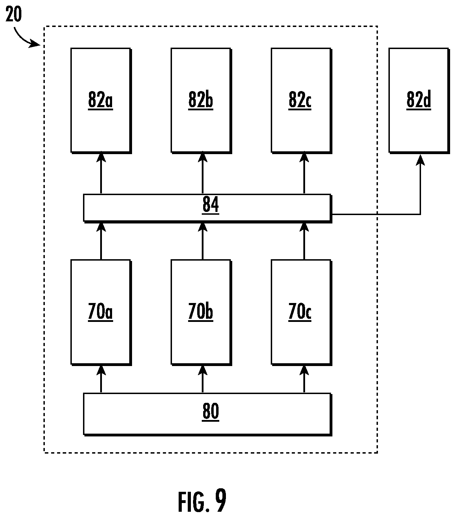

The transport refrigeration system 20 may include the plurality of load modules 82a-82d as an alternative to or in addition to the power source modules 70a-70c and/or the fuel modules 80a-80d. In an embodiment, best shown in FIG. 8, each of the plurality of load modules 82a-82d may be connected to a single power source 70. Alternatively, as shown in FIG. 9, each of the plurality of load modules 80a-80d may be connected to a distribution device 84. In such embodiments, a single power source or a plurality of power source modules 70a-70c (as shown) may be configured to provide power to the distribution device 84. In turn, the distribution device 84, such as in response to one or more commands from the controller 72, is configured to deliver power as needed to each of the plurality of load modules 82a-82d. By providing a plurality of load modules 82a-82d, energy may be delivered to the various loads of the transport refrigeration system 20 in a desired sequence, such as associated with a vapor compression system. For example, within the trailer refrigeration unit 30, operation of the condenser fans 42 may be initiated prior to initiation of the compressor 32, and power may be supplied to the evaporator fans 50 only after the compressor 32 has been energized.

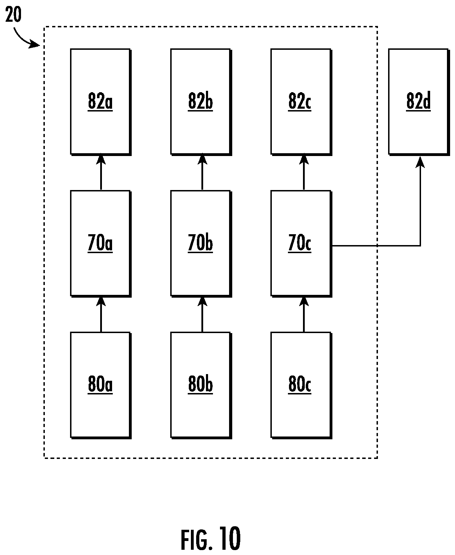

With reference now to FIG. 10, in another embodiment, the transport refrigeration system 20 includes a plurality of power source modules 70a-70c, each power module being directly coupled to a respective load module or group of load modules 82a-82d to deliver power thereto. Although the fuel source 80 of the transport refrigeration system 20 in FIG. 10 is illustrated as including a plurality of fuel modules 80a-80c, embodiments where a single fuel source or supply is provided are also contemplated herein. Further, it should be understood that in general, a transport refrigeration system 20 including any combination of modules integrated into one or more, or in some instances all, of the component levels of the transport refrigeration system 20 is within the scope of the disclosure.

In embodiments including a plurality of fuel source modules 80a-80d, a plurality of power source modules 70a-70c, and a plurality of load modules 82a-82d, each fuel module 80a-80d may be associated with a respective power source module 70a-70c and a respective load module 82a-82d. Accordingly, in embodiments where at least some of the load modules 82a-82d are associated with a different zone of the container 22, each zone of the container 22 may be powered by a distinct fuel module 80a-80c and power source module 70a-70c, in combination.

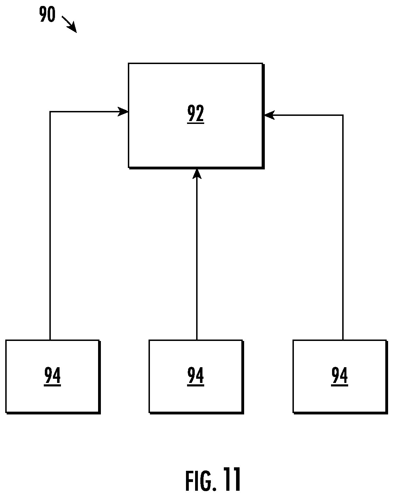

With reference now to FIG. 11, in an embodiment, the transport refrigeration system 20 includes a management system 90 including a processor 92 and a plurality of sensors 94 operably coupled to the processor 92. The processor 92 of the management system 90 may be separate from, or may be integral with the controller 72. The plurality of sensors 94 may be operably coupled to each of the modules at one or more component levels of the transport refrigeration system 20, such as each of the power source modules 70a-70c and/or each of the fuel source modules 80a-80d for example. The sensors 94 may be operable to monitor operation of the power source modules 70-70c or monitor operation of the fuel source modules 80a-80d. For example, one or more sensors 94 may be used to detect excessive ground leakage currents or sense that the phase sequence of a three-phase system is incorrect. In an embodiment, the sensors are configured to detect when a failure of a respective module has occurred and/or when a failure is about to occur. In response to a signal indicative of a failure or an imminent failure, the processor 92 may adjust the delivery path for generating electrical power and delivering the electrical power to a load. For example, the processor 92 may adjust the fuel source module and/or power the system module being used to generate and provide electrical power to the same load. Alternatively, or in addition, the processor 92 may use the information provided by the sensors 94 to track which modules are used most often, and in response, adjust the selected modules that form the delivery path to optimize the lifetime of the system.

A transport refrigeration system 20 having one or more components provided in the form of modules may have not only a reduced likelihood of failure, but also an increase operational efficiency.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

The following clauses recite features of the invention which may or may not currently be claimed, and which may serve as basis for amendment and/or one or more divisional applications.
1. A transport refrigeration system comprising:
   a plurality of component levels including a fuel source, a power source comprising a fuel cell operably coupled to the fuel source and configured to produce electrical power, and at least one load connected to and operable to receive electrical power from the power source, the at least one load including a refrigeration unit having a refrigerant circuit through which a refrigerant is circulated;
   wherein at least one of the plurality of component levels comprises a plurality of modules.
2. The transport refrigeration system of clause 1, wherein the at least one load further comprises a load separate from the refrigeration unit.
3. The transport refrigeration system of clause 1, wherein the at least one load includes a plurality of load modules.
4. The transport refrigeration system of clause 3, wherein the refrigeration unit is a single load module of the plurality of load modules.
5. The transport refrigeration system of clause 3, wherein the refrigeration unit further comprises a plurality of electrical loads, each of the plurality of electrical loads being a distinct load module.
6. The transport refrigeration system of clause 5, wherein the plurality of electrical loads of the refrigeration unit further comprises a controller, a compressor, and at least one fan assembly, wherein a first load module includes the controller and a second load module includes at least one of the compressor and the at least one fan assembly.
7. The transport refrigeration system of clause 3, wherein at least one load module of the plurality of load modules is associated with component separate from the refrigeration unit.
8. The transport refrigeration system of clause 3, wherein the power source includes a plurality of power source modules, each of the plurality of power source modules is operably coupled to at least one of the plurality of load modules.
9. The transport refrigeration system of clause 8, wherein each of the plurality of power source modules is operably coupled to each of the plurality of load modules.
10. The transport refrigeration system of clause 8, further comprising a distribution device operably coupled to an outlet of each of the plurality of power source modules and an inlet of each of the plurality of load modules.
11. The transport refrigeration system of clause 8, wherein the fuel source includes a plurality of fuel source modules, each of the plurality of fuel source modules being operably coupled to a respective power source module of the plurality of power source modules, and each of the plurality of power source modules being operably coupled to a respective load module of the plurality of load modules.
12. The transport refrigeration system of clause 11, wherein the refrigeration unit is operably coupled to a container, the container having a plurality of distinct zones formed therein, each zone of the plurality of zones part of a corresponding load module of the plurality of load modules.
13. The transport refrigeration system of clause 1, wherein the fuel source includes a plurality of fuel source modules.
14. The transport refrigeration system of clause 13, wherein at least one of the plurality of fuel source modules is located remotely from the refrigeration system.
15. The transport refrigeration system of clause 13, wherein the power source includes a plurality of power source modules, each of the plurality of fuel source modules being operably coupled to at least one of the plurality of power source modules.
16. The transport refrigeration system of clause 15, wherein each of the plurality of fuel source modules is operably coupled to each of the plurality of power source modules.
17. A method of operating a transport refrigeration system comprising:
   generating, using a power source comprising a fuel cell, an electrical power and delivering the electrical power to a load via a delivery path;
   monitoring operation of one or more components of the refrigeration system; and
   adjusting the delivery path in response to said monitoring, wherein adjusting the delivery path comprises at least one of (i) adjusting at least one power source module operable to generate the electrical power; and (ii) adjusting at least one fuel source module operable to supply fuel used to generate the electrical power.
18. The method of clause 17, wherein the monitoring operation of the one or more components further comprises sensing a failure or an imminent failure of the one or more components.
19. A continuously operable power system for a transport refrigeration system, the power system comprising:
   a power source comprising a fuel cell;
   a filling station;
   a plurality of fuel canisters; and
   a piping system connecting the plurality of fuel canisters to the filling station and to the power source, the piping system including at least one isolation valve operable to control a flow within the piping system, the at least one isolation valve being positionable such that a fuel canister of the plurality of fuel canisters in fluid communication with the power source is isolated from another fuel canister of the plurality of fuel canisters, the another fuel canister being in fluid communication with the filling station.

## Claims

1. A transport refrigeration system comprising:
a plurality of component levels including a fuel source, a power source comprising a fuel cell operably coupled to the fuel source and configured to produce electrical power, and at least one load connected to and operable to receive electrical power from the power source, the at least one load including a refrigeration unit having a refrigerant circuit through which a refrigerant is circulated;
wherein at least one of the plurality of component levels comprises a plurality of modules.

2. The transport refrigeration system of claim 1, wherein the at least one load further comprises a load separate from the refrigeration unit.

3. The transport refrigeration system of claim 1 or 2, wherein the at least one load includes a plurality of load modules.

4. The transport refrigeration system of claim 3, wherein the refrigeration unit is a single load module of the plurality of load modules; and/or
wherein the refrigeration unit further comprises a plurality of electrical loads, each of the plurality of electrical loads being a distinct load module; and optionally
wherein the plurality of electrical loads of the refrigeration unit further comprises a controller, a compressor, and at least one fan assembly, wherein a first load module includes the controller and a second load module includes at least one of the compressor and the at least one fan assembly.

5. The transport refrigeration system of claim 3 or 4, wherein at least one load module of the plurality of load modules is associated with component separate from the refrigeration unit.

6. The transport refrigeration system of claim 3, 4 or 5, wherein the power source includes a plurality of power source modules, each of the plurality of power source modules is operably coupled to at least one of the plurality of load modules.

7. The transport refrigeration system of claim 6, wherein each of the plurality of power source modules is operably coupled to each of the plurality of load modules.

8. The transport refrigeration system of claim 6 or 7, further comprising a distribution device operably coupled to an outlet of each of the plurality of power source modules and an inlet of each of the plurality of load modules.

9. The transport refrigeration system of claim 6, 7 or 8, wherein the fuel source includes a plurality of fuel source modules, each of the plurality of fuel source modules being operably coupled to a respective power source module of the plurality of power source modules, and each of the plurality of power source modules being operably coupled to a respective load module of the plurality of load modules; optionally
wherein the refrigeration unit is operably coupled to a container, the container having a plurality of distinct zones formed therein, each zone of the plurality of zones part of a corresponding load module of the plurality of load modules.

10. The transport refrigeration system of any preceding claim, wherein the fuel source includes a plurality of fuel source modules.

11. The transport refrigeration system of claim 10, wherein at least one of the plurality of fuel source modules is located remotely from the refrigeration system.

12. The transport refrigeration system of claim 10 or 11, wherein the power source includes a plurality of power source modules, each of the plurality of fuel source modules being operably coupled to at least one of the plurality of power source modules; optionally
wherein each of the plurality of fuel source modules is operably coupled to each of the plurality of power source modules.

13. A method of operating a transport refrigeration system comprising:
generating, using a power source comprising a fuel cell, an electrical power and delivering the electrical power to a load via a delivery path;
monitoring operation of one or more components of the refrigeration system; and
adjusting the delivery path in response to said monitoring, wherein adjusting the delivery path comprises at least one of (i) adjusting at least one power source module operable to generate the electrical power; and (ii) adjusting at least one fuel source module operable to supply fuel used to generate the electrical power.

14. The method of claim 13, wherein the monitoring operation of the one or more components further comprises sensing a failure or an imminent failure of the one or more components.

15. A continuously operable power system for a transport refrigeration system, the power system comprising:
a power source comprising a fuel cell;
a filling station;
a plurality of fuel canisters; and
a piping system connecting the plurality of fuel canisters to the filling station and to the power source, the piping system including at least one isolation valve operable to control a flow within the piping system, the at least one isolation valve being positionable such that a fuel canister of the plurality of fuel canisters in fluid communication with the power source is isolated from another fuel canister of the plurality of fuel canisters, the another fuel canister being in fluid communication with the filling station.
